# EUROPÄISCHE PATENTSCHRIFT

(11) **EP 3 384 185 B1**
(45) Veröffentlichungstag und Bekanntmachung des Hinweises auf die Patenterteilung: **17.08.2022**
(21) Anmeldenummer: 16815741.0
(22) Anmeldetag: 30.11.2016
(51) Int. Cl.: F16J 15/00, F16J 15/44, F16J 15/56

(54) **TROCKENLAUFENDE KOLBENSTANGENPACKUNG UND VERFAHREN ZUM BETRIEB EINER TROCKENLAUFENDEN KOLBENSTANGENPACKUNG**
DRY-RUNNING PISTON ROD PACKAGE AND METHOD FOR OPERATING A DRY-RUNNING PISTON ROD PACKAGE
GARNITURE DE TIGE DE PISTON FONCTIONNANT À SEC ET PROCÉDÉ DE FONCTIONNEMENT D'UNE GARNITURE DE TIGE DE PISTON FONCTIONNANT À SEC

(30) Priorität: 30.11.2015 EP 15196957
(43) Veröffentlichungstag der Anmeldung: 10.10.2018
(73) Patentinhaber: Burckhardt Compression AG, 8404 Winterthur (CH)
(72) Erfinder: FEISTEL, Norbert, 8548 Ellikon a.d. Thur Zürich (CH)
(74) Vertreter: Hepp Wenger Ryffel AG
(86) Internationale Anmeldenummer: PCT/EP2016/079341
(87) Internationale Veröffentlichungsnummer: WO 2017/093355

(56) Entgegenhaltungen:
- WO-A1-2015/082497
- DE-A1-102010 033 647
- DE-U1- 8 523 784
- US-A- 4 643 437
- US-A1- 2002 167 132
- US-A1- 2014 035 238

## Beschreibung

Die Erfindung betrifft eine trockenlaufende Kolbenstangenpackung gemäss dem Oberbegriff von Anspruch 1. Die Erfindung betrifft weiter ein Verfahren zum Betrieb einer trockenlaufenden Kolbenstangenpackung gemäss dem Oberbegriff von Anspruch 9.

Trockenlaufende Kolbenkompressoren sind Kompressoren, die im Verdichtungsteil ohne Fremdschmiermittel, wie beispielsweise Schmieröl, arbeiten. Der Kompressionsraum muss dabei gegenüber seiner Umgebung möglichst gut abgedichtet werden, um ein unerwünschtes Ausströmen des zu komprimierenden Mediums zu verhindern oder zumindest auf ein Minimum zu reduzieren. Kritische Stellen bezüglich der Abdichtung sind insbesondere der Bereich der Durchführung der Kolbenstange in den Zylinderinnenraum, wobei diese Durchführung auch als Kolbenstangenpackung bezeichnet wird.

Insbesondere bei trockenlaufenden Kompressoren unterliegen Dichtelemente, wie zum Beispiel Dichtringe zur Abdichtung der Kolbenstange, enorm hohen mechanischen und thermischen Beanspruchungen. Neben guten tribologischen Eigenschaften müssen solche Dichtelemente ihre dichtenden Eigenschaften auch unter hohen Temperaturen und bei hohen Druckdifferenzen behalten.

Insbesondere zum Abdichten der Kolbenstange in trockenlaufenden Kolbenkompressoren werden Dichtelemente heute häufig aus Kunststoff, beispielsweise aus gefüllten Polymeren bzw. Hochtemperaturpolymeren hergestellt. Als Polymermaterial wird beispielsweise Polytetrafluorethylen (PTFE), Polyetheretherketon (PEEK) Polymid (PI) oder Polyamidimid (PAI) verwendet. Diese Polymere werden üblicherweise mit Füllstoffen wie Kohlenstoff, Grafit, Glasfasern, Metalle, Keramik oder Festschmierstoffe vermischt und in dieser Form als gefüllte Polymere bezeichnet.

Aus der Druckschrift WO2006042866A1 ist eine trockenlaufende Kolbenstangenpackung für einen Kolbenkompressor aufweisend eine längsbewegliche Kolbenstange bekannt. Diese Kolbenstangenpackung umfasst zumindest einen Dichtring sowie zumindest einen Aktuator, wobei der Aktuator am Dichtring angreift und diesen radial zur Kolbenstange verschieben kann. Dadurch kann die Breite des Spaltes zwischen dem Dichtring und der Kolbenstange ansteuerbar verändert werden. Diese an sich bewährte Anordnung weist den Nachteil auf, dass diese relativ aufwändig ist, und dass der Dichtring einem teilweise grösseren Verschleiss unterliegt.

Aus der Druckschrift WO2015082497A1 ist eine trockenlaufende Kolbenstangenpackung gemäss dem Oberbegriff des Anspruchs 1 bekannt. Diese Kolbenstangenpackung umfasst zumindest einen Dichtring sowie zumindest einen Aktuator, wobei der Aktuator eine axial zur Kolbenstange verlaufende Kraft auf den Dichtring ausüben kann. Diese Anordnung weist den Nachteil auf, dass ein Verschieben des Dichtrings radial zur Kolbenstange auf Grund der angreifenden Kräfte schwierig ist.

Das Dokument DE102010033647A1 offenbart eine Stillstanddichtung, welche bei Stillstand der Kolbenstange mit Hilfe eines Druckrings, der von einem Kolben angetrieben ist, eine Dichtlippe an die Kolbenstange anpresst, um während dem Stillstand des Kompressors durch die zwischen Druckring und Kolbenstange eingeklemmte Dichtlippe ein unerwünschtes Entweichen von Prozessages zu verhindern. Diese Anordnung ist nicht geeignet eine Kolbenstange abzudichten während sich diese bewegt.

Das Dokument US2014/0035238A1 offenbart eine dynamische Dichtung, welche in axialer Richtung von einem Stützring gestützt ist. Mit Hilfe einer hydraulischen Flüssigkeit ist die Elastizität des Stützrings beeinflussbar, damit sich dieser in radialer Richtung besser elastisch verändern kann. Da eine hydraulische Flüssigkeit verwendet wird ist diese Anordnung nicht für eine trockenlaufende Kolbenstangenpackung geeignet.

Es ist daher Aufgabe der vorliegenden Erfindung eine vorteilhaftere trockenlaufende Kolbenstangenpackung sowie ein vorteilhafteres Verfahren zum Betrieb einer trockenlaufenden Kolbenstangenpackung vorzuschlagen.

Diese Aufgabe wird gelöst mit einer trockenlaufenden Kolbenstangenpackung aufweisend die Merkmale von Anspruch 1. Die Unteransprüche 2 bis 8 betreffen weitere, vorteilhaft ausgestaltete Kolbenstangenpackungen. Die Aufgabe wird weiter gelöst mit einem Verfahren aufweisend die Merkmale von Anspruch 9. Die Unteransprüche 10 bis 14 betreffend weitere, vorteilhafte Verfahrensschritte.

Die Aufgabe wird insbesondere gelöst mit einer trockenlaufenden Kolbenstangenpackung zum Abdichten einer in einer Längsrichtung beweglich gelagerten Kolbenstange, umfassend zumindest einen Kammerring sowie einen Dichtring, wobei der Kammerring eine Dichtkammer aufweist innerhalb welcher der Dichtring angeordnet ist, wobei die Kolbenstangenpackung eine Hochdruckseite sowie eine Niederdruckseite aufweist, wobei die Dichtkammer eine zur Hochdruckseite hin ausgerichtete Stützfläche aufweist, welche die Dichtkammer zur Niederdruckseite hin begrenzt, wobei der Dichtring in radialer Richtung eine Innenseite sowie eine Aussenseite aufweist, und wobei der Dichtring eine erste und eine zweite Stirnseite aufweist, wobei die erste Stirnseite zur Hochdruckseite hin ausgerichtet ist und eine Druckangriffsfläche ausbildet, und wobei die zweite Stirnseite zur Niederdruckseite hin ausgerichtet ist und eine Auflagefläche ausbildet, sodass ein unter Druck stehender Dichtring mit der Auflagefläche an der Stützfläche anliegt, wobei eine aktiv wirkende Abhebevorrichtung derart ausgestaltet ist, dass diese einen an der Stützfläche anliegenden Dichtring in Längsrichtung zur Hochdruckseite hin anhebt, um zwischen der Stützfläche und der Auflagefläche des Dichtrings einen Zwischenspalt auszubilden.

Die Aufgabe wird weiter insbesondere gelöst mit einem Verfahren zum Betrieb einer trockenlaufenden Kolbenstangenpackung zum Abdichten einer in einer Längsrichtung beweglich gelagerten Kolbenstange, wobei die Kolbenstangenpackung zumindest einen Kammerring sowie einen Dichtring umfasst, wobei der Kammerring eine Dichtkammer umfasst innerhalb welcher der Dichtring angeordnet ist, wobei die Kolbenstangenpackung die Kolbenstange umschliesst, wobei die Kolbenstangenpackung bezüglich einem Arbeitsgas eine Hochdruckseite sowie eine Niederdruckseite aufweist, wobei die Dichtkammer eine zur Hochdruckseite hin ausgerichtete Stützfläche aufweist, welche die Dichtkammer zur Niederdruckseite hin begrenzt, wobei der Dichtring in radialer Richtung eine Innenseite sowie eine Aussenseite aufweist, und wobei der Dichtring eine erste und eine zweite Stirnseite aufweist, wobei die erste Stirnseite zur Hochdruckseite hin ausgerichtet ist und eine Druckangriffsfläche für das Arbeitsgas ausbildet, und wobei die zweite Stirnseite zur Niederdruckseite hin ausgerichtet ist und eine Auflagefläche ausbildet, sodass der Dichtring während eines Normalbetriebs mit der Auflagefläche gegen die Stützfläche gepresst wird und an dieser anliegt, und wobei der an der Stützfläche anliegende Dichtring zum Zentrieren vorerst durch eine aktiv wirkende Abhebevorrichtung in Längsrichtung zur Hochdruckseite hin bewegt und dabei von der Stützfläche abgehoben wird, sodass zwischen der Stützfläche und der Auflagefläche des Dichtrings ein Zwischenspalt erzeugt wird in welchen das Arbeitsgas von der Hochdruckseite her eindringt, sodass die Anpresskraft des Dichtrings in Längsrichtung reduziert wird, um dadurch die Reibkraft zu reduzieren, welche zu überwinden ist, um den Dichtring in zur Längsrichtung radialen Richtung zu bewegen, und dass der Dichtring nach dessen Abheben in radialer Richtung verschoben wird.

In einer vorteilhaften Ausführungsform ist der Dichtring als endloser Dichtring ausgestaltet. Ein derartiger endloser Dichtring ist bezüglich der Kolbenstange besonders einfach zentrierbar. Der Dichtring kann jedoch auch mehrteilig ausgestaltet sein, und insbesondere eine Mehrzahl, vorzugsweise drei in Umfangsrichtung verlaufend angeordnete Segmente umfassen, die zumindest in radialer Richtung gegeneinander verschiebbar angeordnet sind.

Die erfindungsgemässe trockenlaufende Kolbenstangenpackung weist den Vorteil auf, dass diese eine in Längsrichtung beweglich gelagerte Kolbenstange besonders gut, verschleissarm und somit während einer langen Zeitdauer zuverlässig abdichten kann. Die Kolbenstangenpackung umfasst zumindest einen Kammerring mit einer Dichtkammer, und vorzugsweise eine Mehrzahl von nacheinander folgend angeordneten Kammerringen mit Dichtkammern, wobei in jeder Dichtkammer ein Dichtring, vorzugsweise ein endloser Dichtring angeordnet ist, welcher die Kolbenstange umschliesst. Der Dichtring weist eine zweite Stirnseite auf, welche zur Niederdruckseite der Kolbenstangenpackung hin ausgerichtet ist, wobei üblicherweise zumindest ein statischer Druck auf den Dichtring einwirkt, sodass dieser über die zweite Stirnseite an eine Stützfläche gepresst wird, wobei die Stützfläche die Dichtkammer begrenzt. Die erfindungsgemässe Kolbenstangenpackung umfasst eine Abhebevorrichtung, welche den Dichtring in Verlaufsrichtung der Kolbenstange anhebt, sodass sich zwischen der Stützfläche und der zweiten Stirnseite ein Zwischenspalt ausbildet. Dies hat zur Folge, dass die Haftreibung des Dichtrings reduziert wird, welche überwunden werden muss um den Dichtring in radialer Richtung zu bewegen. Die erfindungsgemässe Kolbenstangenpackung weist somit unter anderem die Vorteile auf, dass einerseits der Dichtring mit geringerer Kraft in radialer Richtung bewegt werden kann, und dass andererseits beim Verschieben des Dichtrings in radialer Richtung ein erheblich reduzierter Verschleiss oder gar kein Verschleiss auftritt. In einer besonders vorteilhaften Ausgestaltung kann sich der Dichtring im angehobenen Zustand durch die einwirkenden Druckkräfte selbsttätig bezüglich der Kolbenstange zentrieren. Der Dichtring wird vorteilhafterweise derart zentriert, dass dieser die Kolbenstange nicht berührt, sodass weder an der Kolbenstange noch an der zur Kolbenstange hin ausgerichteten Dichtfläche des Dichtrings ein Verschleiss auftritt. Die Möglichkeit den Dichtring auf einfache Weise in radialer Richtung zu verschieben ergibt zudem den Vorteil, dass der Dichtspalt zwischen der Kolbenstange und der zur Kolbenstange hin ausgerichteten Dichtfläche des Dichtrings sehr klein gehalten werden kann, da die Position des Dichtring bezüglich der Kolbenstange verändert beziehungsweise eingestellt werden kann.

In einem vorteilhaften Verfahren wird der Dichtring regelmässig bezüglich der Kolbenstange zentriert. Die Zentrierung erfolgt vorzugsweise während der Saugbewegung der Kolbenstange. In einem besonders vorteilhaften Verfahren wird der Dichtring während jeder Saubewegung der Kolbenstange, das heisst einmal pro Umdrehung der Kurbelwelle um 360°, durch die Abhebevorrichtung angehoben und bezüglich der Kolbenstange zentriert, vorzugsweise durch die am Dichtring angreifenden Druckkräfte des Arbeitsgases selbsttätig zentriert. Es kann sich jedoch auch als vorteilhaft erweisen zumindest einen zusätzlichen Radialaktuator vorzusehen, welcher mechanisch auf den Dichtring einwirkt, um diesen im abgehobenen Zustand in radialer Richtung zu zentrieren.

Die erfindungsgemässe Kolbenstangenpackung weist daher den Vorteil auf, dass der Dichtring keinen oder einen nur sehr geringen Verschleiss aufweist, sodass die Kolbenstangenpackung während einer längeren Betriebsdauer wartungsfrei betrieben werden kann. Die erfindungsgemässe Kolbenstangenpackung weist den weiteren Vorteil auf, dass der Dichtspalt zwischen Kolbenstange und Dichtring sehr klein gehalten werden kann, ohne dass ein Verschleiss auftritt. Dieser kleine Dichtspalt weist den Vorteil auf, dass die erfindungsgemässe Kolbenstangenpackung auch höhere Drücke zuverlässig abdichten kann, oder dass zum Abdichten weniger Dichtringe erforderlich sind.

Die Abhebevorrichtung ist vorzugsweise als elektromagnetische Vorrichtung oder als mechanische Vorrichtung, insbesondere umfassend Piezokristalle ausgestaltet. In einer vorteilhaften Ausgestaltung umfasst die erfindungsgemässe Kolbenstangenpackung zudem zumindest einen Sensor zum Erfassen der Lage des Dichtrings bezüglich der Kolbenstange. Dieser Sensor kann beispielsweise als Distanzsensor ausgestaltet sein, um die Distanz zwischen der Oberfläche der Kolbenstange und der Dichtfläche des Dichtrings zu messen. Der Sensor könnte zum Beispiel auch als Temperatursensor ausgestaltet sein, welcher die Temperatur des Dichtrings und oder der Kolbenstange erfasst, um bei einer gegenseitige Berührung von Dichtring und Kolbenstange die dadurch entstehende Temperaturerhöhung zu erfassen.

Die Erfindung wird anhand der nachfolgenden Figuren näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile sind mit denselben Bezugszeichen bezeichnet. Um die erfindungsgemässe Funktionsweise veranschaulichen zu können, sind in den Figuren vereinfachte Prinzipdarstellungen gezeigt, bei denen manche Elemente einer Kolbenstangenpackung wegen einer besseren Übersichtlichkeit nicht dargestellt sind. Dies bedeutet jedoch nicht, dass derartige Bauteile bei einer erfindungsgemäßen Lösung nicht vorhanden sind.

Es zeigt:
- Fig. 1: eine Kolbenstangenpackung sowie eine darin angeordnete, trocken laufende Kolbenstange;
- Fig. 2: eine Teilansicht eines Längsschnittes einer Dichtungsanordnung während eines Normalbetriebs;
- Fig. 3: die Ansicht gemäss Fig. 2, wobei der angreifende Druck dargestellt ist;
- Fig. 4: eine Teilansicht eines Längsschnittes einer Dichtungsanordnung während dem Verschieben des Dichtrings;
- Fig. 5: die Ansicht gemäss Fig. 4, wobei der angreifende Druck dargestellt ist;
- Fig. 6: eine Draufsicht auf einen Kammerring;
- Fig. 7: ein weiteres Ausführungsbeispiel einer Kolbenstangenpackung;
- Fig. 8: eine Draufsicht auf den Dichtring gemäss Figur 7;
- Fig. 9: ein weiteres Ausführungsbeispiel einer Kolbenstangenpackung;
- Fig. 10: eine perspektivische Ansicht eines mehrteiligen Dichtrings;
- Fig. 11: ein Ausführungsbeispiel einer Kolbenstangenpackung mit mehrteiligem Dichtring.

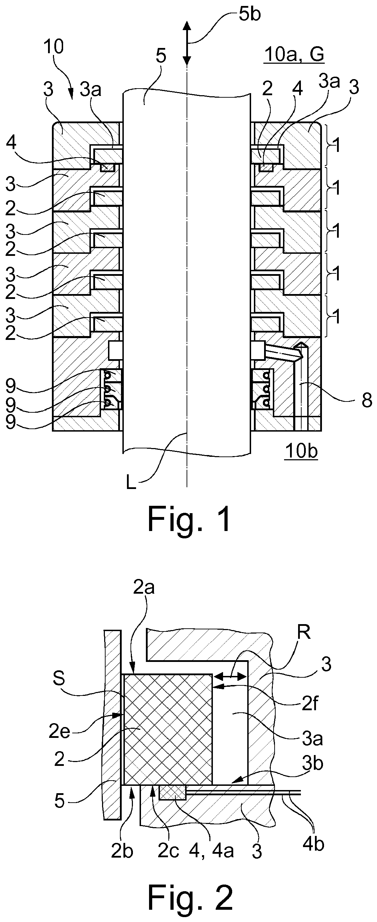

Figur 1 zeigt einen Längsschnitt einer trockenlaufenden Kolbenstangenpackung 10 zum Abdichten einer durch die Kolbenstangenpackung 10 hindurch verlaufenden, in einer Längsrichtung L beziehungsweise in Bewegungsrichtung 5b beweglich gelagerten Kolbenstange 5. Eine Kolbenstangenpackung 10 umfasst zumindest einen Kammerring 3, eine Dichtkammer 3a sowie einen in der Dichtkammer 3a angeordneten endlosen Dichtring 2, wobei der Kammerring 3 mit Dichtkammer 3a und dem Dichtring 2 eine Dichtanordnung 1 ausbilden. In zumindest einer der Dichtkammern 3a oder in jeder Dichtkammer 3a könnten auch mehrere Dichtring 2, zum Beispiel zwei oder drei Dichtringe, in Längsrichtung L nacheinander folgend und sich gegenseitig berührend angeordnet sein. Die Kolbenstangenpackung 10 weist bezüglich einem zu komprimierenden Arbeitsgas G eine Hochdruckseite 10a sowie eine Niederdruckseite 10b auf. Das Ausführungsbeispiel der in Figur 1 dargestellten Kolbenstangenpackung 10 umfasst fünf in Längsrichtung L nacheinander angeordnete Dichtanordnungen 1, sodass die Kolbenstange 5 von fünf Dichtringe 2 umschlossen ist, welche die Kolbenstange 5 abdichten. Die Dichtringe 2 dichten die Druckdifferenz zwischen der Hochdruckseite 10a, dem Zylinder, und der Niederdruckseite 10b, dem Kurbelgehäuse ab. Eine eventuell auftretende Leckage wird über eine Leckgasleitung 8 abgeführt, und eine Leckgasdichtung 9 verhindert den Gasdurchtritt in Richtung des Kurbelgehäuses zumindest teilweise.

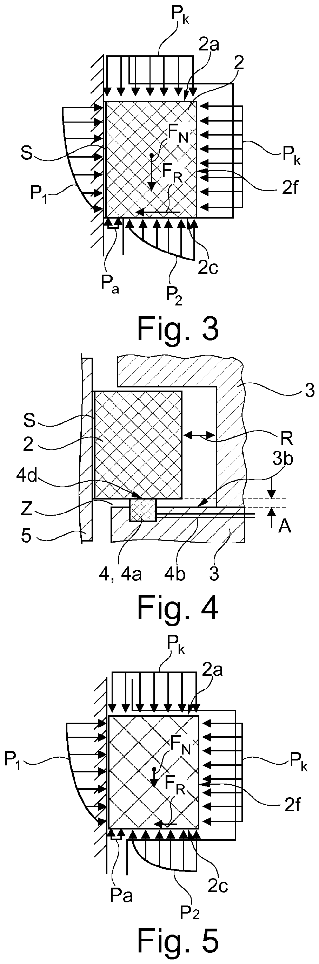

Figur 2 zeigt eine Teilansicht des in Figur 1 dargestellten Längsschnittes im Detail. Die Dichtkammer 3a weist eine zur Hochdruckseite 10a hin ausgerichtete Stützfläche 3b auf, welche die Dichtkammer 3a zur Niederdruckseite 10b hin begrenzt. Der Dichtring 2 weist in radialer Richtung eine zur Kolbenstange 5 hin ausgerichtete Innenseite 2e sowie radial nach Aussen eine Aussenseite 2f auf. Zwischen der Innenseite 2e und der Oberfläche der Kolbenstange 5 ist ein Spalt S ausgebildet. Der Dichtring 2 weist eine erste und eine zweite Stirnseite 2a, 2b auf, wobei die erste Stirnseite 2a zur Hochdruckseite 10a in ausgerichtet ist und eine Druckangriffsfläche ausbildet, und wobei die zweite Stirnseite 2b zur Niederdruckseite 10b hin ausgerichtet ist und eine Auflagefläche 2c ausbildet, sodass ein unter Druck stehender Dichtring 2 mit der Auflagefläche 2c an der Stützfläche 3b anliegt. Eine Abhebevorrichtung 4 umfassend einen Aktuator 4a ist derart ausgestaltet, dass diese einen an der Stützfläche 3b anliegenden Dichtring 2 in Längsrichtung L anheben kann, um zwischen der Stützfläche 3b und der Auflagefläche 2c des Dichtrings 2 vorübergehend einen Zwischenspalt Z auszubilden, damit das Arbeitsgas G in den Zwischenspalt Z eindringen kann, und dadurch die am Dichtring 2 angreifenden Druckkräfte verändert werden. Figur 4 zeigt den Dichtring 2 im angehobenen Zustand, unter Ausbildung des Zwischenspaltes Z, wobei der Dichtring 2 durch die Abhebevorrichtung 4 um eine Abhebedistanz A angehoben ist, wobei die maximale Abhebedistanz A, vorzugsweise weniger als 1 mm beträgt, vorteilhafterweise weniger als 0,1 mm, und besonders vorteilhaft einige Mikrometer beträgt, beispielsweise im Bereich zwischen 0,01 mm und 0,1 mm. Im Ausführungsbeispiel gemäss der

Figuren 2 und 4 umfasst die Abhebevorrichtung 4 einen piezoelektrischen Aktuator 4a, welcher eine Stossfläche 4d aufweist. Im aktivierten Zustand steht die Stossfläche 4d, wie in Figur 4 dargestellt, über die Stützfläche 3b vor, und hebt dabei den Dichtring 2 an. Ansonsten ist der piezoelektrischen Aktuator 4a im nicht aktivierten Zustand, das heisst im passiven Zustand vorzugsweise innerhalb des Kammerrings 3 angeordnet, derart, dass die Stossfläche 4d nicht über die Stützfläche 3b vorsteht, indem die Stossfläche 4d entweder auf gleicher Ebene wie die Stützfläche 3b zu liegen kommt, oder indem die Stossfläche 4d bezüglich der Stützfläche 3b vertieft zu liegen kommt. Bei nicht aktiviertem Zustand des Aktuators 4a liegt der Dichtring 2 auf Grund des Drucks in der Dichtkammer 3a an der Stützfläche 3b an.

Während des Betriebs des Kolbenkompressors können am Dichtring 2 zumindest zwei unterschiedliche Druckzustände auftreten. Während einer Saugbewegung der Kolbenstange 5 liegt am Dichtring 2 ein vorzugsweise im Wesentlichen konstanter Saugdruck an. Während einer Kompressionsbewegung der Kolbenstange 5 liegt am Dichtring ein Kompressions- bzw. ein Verdichtungsdruck an. In einem möglichen Ausführungsbeispiel beträgt der Druck auf der Niederdruckseite 10b Umgebungsdruck, das heisst 1 bar, wogegen der Druck auf der Hochdruckseite 10a während der Saugbewegung einen Saugdruck von 40 bar aufweist, und während der Kompressionsbewegung auf einen Verdichtungsdruck bis 100 bar ansteigt.

Figur 3 zeigt die Ansicht gemäss Figur 2, wobei an der Dichtkammer 3a beziehungsweise am Dichtring 2 ein konstanter Saugdruck anliegt, wobei die unterschiedlichen, auf den Dichtring 2 einwirkenden Drücke im Detail dargestellt sind. Ein Kammerdruck Pₖ wirkt sowohl auf die erste Stirnseite 2a als auch auf die Aussenseite 2f des Dichtrings 2. Entlang des Spaltes S ist der in Längsrichtung L der Kolbenstange 5 abnehmende Spaltdruck P₁ dargestellt. Entlang der Auflagefläche 2c ist der in radialer Richtung abnehmende Auflagedruck P₂ dargestellt. Am Ausgang der Kammer 3a liegt der Austrittsdruck Pₐ an. Die erforderliche Radialkraft F_{R} zum Verschieben des Dichtrings 2 in radialer Richtung ist gleich dem Reibungskoeffizient µ multipliziert mit der Anpresskraft F_{N}.

Figur 5 zeigt die Ansicht gemäss Figur 4 mit angehobenem Dichtring 2, wobei am Dichtring 2 ein konstanter Saugdruck anliegt, und wobei die unterschiedlichen, auf den Dichtring 2 einwirkenden Drücke im Detail dargestellt sind. Der Kammerdruck Pₖ wirkt sowohl auf die erste Stirnseite 2a als auch auf die Aussenseite 2f des Dichtrings 2. Entlang des Spaltes S ist der in Längsrichtung L der Kolbenstange 5 abnehmende Spaltdruck P₁ dargestellt. Entlang der Auflagefläche 2c ist der in radialer Richtung geringfügig abnehmende Auflagedruck P₂ dargestellt. Am Ausgang der Kammer 3a liegt der Austrittsdruck Pₐ an. Das Abheben des Dichtrings 2 beziehungsweise der dadurch entstehende Zwischenspalt Z hat einen geringfügig abnehmenden Auflagedruck P₂ zur Folge, was die auf die Stützfläche 3b wirkende Anpresskraft F_{N} des Dichtrings 2 reduziert, was wiederum die zum radialen Verschieben des Dichtrings erforderliche Kraft F_{R} reduziert, wobei die radiale Kraft F_{R} gleich dem Reibungskoeffizient µ multipliziert mit der Anpresskraft F_{N} ist. Aus einem Vergleich der Figuren 3 und 5 ist ersichtlich, dass in Figur 5 die Anpresskraft F_{N} und dadurch auch die Kraft F_{R} erheblich reduziert ist.

An Hand der Figuren 3 und 5 wird das Verfahren zum Betrieb der trockenlaufenden Kolbenstangenpackung 10 zum Abdichten der in Längsrichtung L beweglich gelagerten Kolbenstange 5 erläutert. Während eines Normalbetriebs, das heisst während einer Saugbewegung, während der der im Wesentlichen konstante Saugdruck an der Kolbenstangendichtung 10 anliegt, wird der Dichtring 2 mit der Auflagefläche 2c gegen die Stützfläche 3b gepresst. Zum Zentrieren des Dichtrings 2 wird der Dichtring 2 vorerst durch die Stossfläche 4d der Abhebevorrichtung 4 in Längsrichtung L bewegt und dabei von der Stützfläche 3b abgehoben, sodass zwischen der Stützfläche 3b und der Auflagefläche 2c des Dichtrings 2 ein Zwischenspalt Z erzeugt wird, um dadurch die Reibkraft F_{R} zu reduzieren, welche zu überwinden ist, um den Dichtring 2 in zur Längsrichtung L radialen Richtung R zu bewegen. Nach dem Abheben des Dichtrings 2 wird dieser, falls der Dichtring 2 exzentrisch bezüglich der Kolbenstange 5 angeordnet ist, auf Grund der Summe aller am Dichtring 2 angreifenden Druckkräfte vorzugsweise selbsttätig in radialer Richtung R verschoben und zentriert.

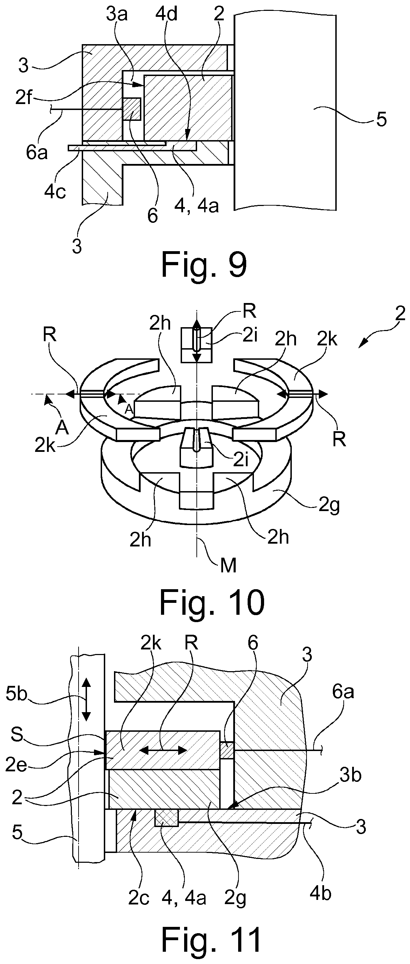

Vorteilhafterweise wird der Dichtring 2 während einer Saugbewegung der Kolbenstange 5 durch die Abhebevorrichtung 4 sowohl angehoben und als auch wieder abgesenkt. Vorteilhafterweise wird der Dichtring 2 im angehobenen Zustand durch die einwirkenden Radialkräfte selbsttätig zentriert. Es kann sich jedoch auch als vorteilhaft erweisen den Dichtring 2 im angehobenen Zustand durch einen auf den Dichtring 2 einwirkenden Radialaktuator 6 zu zentrieren, zum Beispiel einem mechanisch wirkenden Radialaktuator 6, wie dies in Figur 9 oder 11 dargestellt ist. In einem vorteilhaften Verfahren wird der Dichtring 2 während einer vollständigen Hin- und Herbewegung der Kolbenstange 5 einmal angehoben und wieder abgesenkt. Dieses Verfahren weist den Vorteil auf, dass der Dichtring 2 während jeder Umdrehung der Kurbelwelle um 360° wieder neu bezüglich der Kolbenstange 5 zentriert werden kann, sodass eine gegenseitige Berührung von Dichtring 2 und Kolbenstange 5 weitgehend und vorteilhafterweise vollständig vermieden werden kann. Es kann sich zudem als vorteilhaft erweisen zumindest einen Sensor anzuordnen, welcher die Lage des Dichtrings 2 bezüglich der Oberfläche der Kolbenstange 5 erfasst. In einem vorteilhaften Verfahren wird der Dichtring 2 nur dann in Längsrichtung L angehoben und anschliessend in radialer Richtung verschoben, falls beispielsweise die Distanz zwischen der Kolbenstange 5 und der Innenseite 2e des Dichtrings 2 von einem vorgegebenen Solldistanzwert abweicht. Ein solches Verfahren ermöglicht es beispielsweise die Anzahl des Abhebens des Dichtrings 2 während dem Verlauf der Zeit zu minimieren. In einer vorteilhaften Ausgestaltung ist für jeden Dichtring 2 der Kolbenstangenpackung 10 eine Abhebevorrichtung 4 vorgesehen. In einem möglichen Verfahren werden alle Abhebevorrichtungen 4 während einer Saugbewegung angehoben und wieder abgesenkt, vorzugsweise gegenseitig synchron. In einem weiteren vorteilhaften Verfahren können beispielsweise auch nur diejenigen Abhebevorrichtungen 4 betätigt werden, deren zugeordnete Dichtringe 2 beispielsweise von einem vorgegebenen Solldistanzwert abweichen.

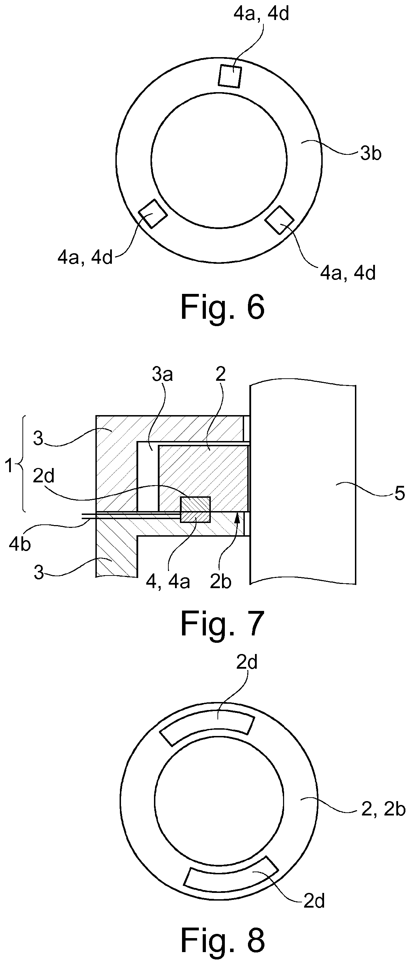

Figur 6 zeigt eine Draufsicht auf die in Figur 4 dargestellte Stützfläche 3b. Im Kammerring 3 sind drei in Umfangsrichtung beabstandete Abhebevorrichtungen 4 mit Aktuatoren 4a und Stossflächen 4d angeordnet, welche auf den Dichtring 2 wirken. Pro Kammerring 3 sind zumindest zwei in Umfangsrichtung um 180° beabstandete Aktuatoren 4a angeordnet, und vorzugsweise drei Aktuatoren 4a, welche besonders vorteilhaft gegenseitig gleichmässig in Umfangsrichtung um 120° beabstandet angeordnet sind.

Figur 7 zeigt eine Teilansicht eines Längsschnittes einer weiteren Kolbenstangenpackung 10. Im Unterschied zu der in Figur 2 dargestellten Abhebevorrichtung umfasst die in Figur 7 dargestellte Abhebevorrichtung 4 ein Permanentmagnet 2d sowie ein Elektromagnet 4a, wobei der Permanentmagnet 2d im Dichtring 2 angeordnet ist, und wobei der Elektromagnet 4a im Kammerring 3 angeordnet ist, wobei der Permanentmagnet 2d und der Elektromagnet 4a in Längsrichtung L gegenüber liegend angeordnet sind. Ein Aktivieren des Elektromagneten 4a bewirkt ein Abstossen des Permanentmagneten 2d und damit ein Anheben des Dichtrings 2. Figur 8 zeigt eine Draufsicht auf die zweite Stirnseite 2b des Dichtrings 2 mit zwei im Dichtring 2 in Umfangsrichtung beabstandet angeordneten Permanentmagneten 2d.

Figur 9 zeigt eine Teilansicht eines Längsschnittes einer weiteren Kolbenstangenpackung 10. Im Unterschied zu der in Figur 7 dargestellten Abhebevorrichtung umfasst die in Figur 9 dargestellte Abhebevorrichtung 4 eine beispielsweise vollständig mechanische Anordnung, umfassend beispielsweise einen Zugstab 4c, wobei im Aktuator 4a ein Gelenk angeordnet ist, um dadurch die Stossfläche 4d anzuheben und abzusenken. Vorteilhafterweise ist zudem ein Radialaktuator 6 mit Ansteuerleitung 6a angeordnet, welcher derart ausgestaltet ist, dass dieser an der Aussenseite 2f des Dichtrings 2 angreift, und den Dichtring 2 in radialer Richtung R verschiebt. Vorteilhafterweise sind eine Mehrzahl von Radialaktuatoren 6 in Umfangsrichtung beabstandet angeordnet.

Figur 10 zeigt einen mehrteiligen Dichtring 2 umfassend ein in Umfangsrichtung endloses Führungsteil 2g mit Seitenführungen 2h, sowie umfassend zwei schmale Dichtsegmente 2i und zwei breite Dichtsegmente 2k, welche im Führungsteil 2g durch die Seitenführungen 2h in radialer Richtung R beweglich gelagert sind.

Figur 11 zeigt eine Teilansicht eines Längsschnittes einer weiteren Kolbenstangenpackung 10. Im Unterschied zu der in Figur 2 dargestellten Anordnung umfasst die Anordnung gemäss Figur 11 den in Figur 10 dargestellten Dichtring 2 sowie zudem einen Radialaktuator 6. Der Schnitt durch den Dichtring 2 verläuft, wie in Figur 10 dargestellt, entlang der Schnittlinie A-A. Aus Figur 11 ist insbesondere ersichtlich, dass der Dichtring 2 über die Auflagefläche 2c an der Stützfläche 3b der Kammer 3a anliegt. Die Abhebevorrichtung 4 umfasst einen piezoelektrischen Aktuator 4a sowie eine elektrische Zuleitung 4b. Das breite Dichtsegment 2k ist im Dichtring 2 in radialer Richtung R verschiebbar gelagert. Ein Aktivieren des Aktuators 4 bewirkt einen Zwischenspalt Z, wie in Figur 4 dargestellt. Bei geöffnetem Zwischenspalt Z wird vorzugsweise das Führungsteil 2g des Dichtrings 2 bezüglich der Kolbenstange 5 zentriert. Die in Figur 11 dargestellte Anordnung umfasst zumindest zwei Radialaktuatoren 6, wobei je ein Radialaktuator 6 auf eines der beiden breiten Dichtsegmente 2k angreift um diese in radialer Richtung R zu verschieben. Die in Figur 11 dargestellte Anordnung umfasst vorzugsweise vier in Umfangsrichtung zur Kolbenstange derart gegenseitig beabstandete Radialaktuatoren 6, dass jeder der vier in Figur 10 dargestellten Dichtsegmente 2k, 2i ansteuerbar in radialer Richtung R verschiebbar sind. Somit ist die Breite des Spaltes S, das heisst die Distanz zwischen der Oberfläche der Kolbenstange 5 und der Innenseite der Dichtflächen 2e der Dichtsegmente 2k, 2i einstellbar. Es gibt eine Vielzahl von möglichen Ausgestaltungen von Dichtringen 2, die für eine Anordnung wie in Figur 11 dargestellt geeignet sind, wobei diese Dichtringe 2 Dichtsegmente 2i, 2k umfassen, welche in radialer Richtung R verschiebbar sind.

## Patentansprüche

1. Trockenlaufende Kolbenstangenpackung (10) zum Abdichten einer in einer Längsrichtung (L) beweglich gelagerten Kolbenstange (5), umfassend zumindest einen Kammerring (3) sowie einen Dichtring (2), wobei der Kammerring (3) eine Dichtkammer (3a) aufweist innerhalb welcher der Dichtring (2) angeordnet ist, wobei die Kolbenstangenpackung (10) eine Hochdruckseite (10a) sowie eine Niederdruckseite (10b) aufweist, wobei die Dichtkammer (3a) eine zur Hochdruckseite (10a) hin ausgerichtete Stützfläche (3b) aufweist, welche die Dichtkammer (3a) zur Niederdruckseite (10b) hin begrenzt, wobei der Dichtring (2) in radialer Richtung eine Innenseite (2e) sowie eine Aussenseite (2f) aufweist, und wobei der Dichtring (2) eine erste und eine zweite Stirnseite (2a, 2b) aufweist, wobei die erste Stirnseite (2a) zur Hochdruckseite (10a) hin ausgerichtet ist und eine Druckangriffsfläche ausbildet, und wobei die zweite Stirnseite (2b) zur Niederdruckseite (10b) hin ausgerichtet ist und eine Auflagefläche (2c) ausbildet, sodass ein unter Druck stehender Dichtring (2) mit der Auflagefläche (2c) an der Stützfläche (3b) anliegt, wobei der Dichtring (2) als endloser Dichtring ausgestaltet ist, **dadurch gekennzeichnet, dass** eine aktiv wirkende Abhebevorrichtung (4) umfassend einen Aktuator (4a) derart ausgestaltet ist, dass diese einen an der Stützfläche (3b) anliegenden Dichtring (2) in Längsrichtung (L) zur Hochdruckseite (10a) hin anhebt, um zwischen der Stützfläche (3b) und der Auflagefläche (2c) des Dichtrings (2) einen Zwischenspalt (Z) auszubilden.

2. Kolbenstangenpackung nach Anspruch 1, **dadurch gekennzeichnet, dass** diese eine Mehrzahl von in Längsrichtung (L) nacheinander angeordneten Kammerringen (3) und Dichtkammern (3a) umfasst, wobei in jeder Dichtkammer (3a) ein einzelner Dichtring (2) angeordnet ist.

3. Kolbenstangenpackung nach einem der vorhergehenden Ansprüche, **dadurch gekennzeichnet, dass** der Dichtring (2) mehrteilig ausgestaltet ist, umfassend ein in Umfangsrichtung endloses Führungsteil (2g) mit Seitenführungen (2h), sowie umfassend zwei schmale Dichtsegmente (2i) und zwei breite Dichtsegmente (2k), welche im Führungsteil (2g) durch die Seitenführungen (2h) in radialer Richtung (R) beweglich gelagert sind.

4. Kolbenstangenpackung nach einem der vorhergehenden Ansprüche, **dadurch gekennzeichnet, dass** jedem Dichtring (2) zumindest zwei und vorzugsweise drei Abhebevorrichtungen (4) zugeordnet sind, und dass die Abhebevorrichtungen (4) in Umfangsrichtung des Dichtrings (2) gegenseitig beabstandet angeordnet sind.

5. Kolbenstangenpackung nach Anspruch 4, **dadurch gekennzeichnet, dass** die Abhebevorrichtung (4) ein Permanentmagnet (2d) sowie ein Elektromagnet umfasst, wobei der Permanentmagnet (2d) im Dichtring (2) angeordnet ist, und wobei der Elektromagnet im Kammerring (3) angeordnet ist, wobei der Permanentmagnet (2d) und der Elektromagnet in Längsrichtung (L) vorzugsweise gegenüber liegend angeordnet sind.

6. Kolbenstangenpackung nach Anspruch 4, **dadurch gekennzeichnet, dass** die Abhebevorrichtung (4) ein Stossteil mit einer Stossfläche (4d) umfasst, wobei die Stossfläche (4d) im aktivierten Zustand über die Stützfläche 3b vorsteht.

7. Kolbenstangenpackung nach Anspruch 4 oder 6, **dadurch gekennzeichnet, dass** die Abhebevorrichtung (4) einen Piezokristall umfasst, wobei der Piezokristall im Kammerring (3) angeordnet ist.

8. Kolbenstangenpackung nach einem der vorhergehenden Ansprüche, **dadurch gekennzeichnet, dass** diese einen Radialaktuator (6) umfasst, welcher derart ausgestaltet ist, dass dieser an der Aussenseite (2f) des Dichtrings (2) angreift, und den gesamten Dichtring (2) oder Dichtsegmente (2i, 2k) des Dichtrings (2) in radialer Richtung (R ) verschiebt.

9. Verfahren zum Betrieb einer trockenlaufenden Kolbenstangenpackung (10) zum Abdichten einer in einer Längsrichtung (L) beweglich gelagerten Kolbenstange (5), wobei die Kolbenstangenpackung (10) zumindest einen Kammerring (3) sowie einen Dichtring (2) umfasst, wobei der Kammerring (3) eine Dichtkammer (3a) umfasst innerhalb welcher der Dichtring (2) angeordnet ist, wobei die Kolbenstangenpackung (10) die Kolbenstange (5) umschliesst, wobei die Kolbenstangenpackung (10) bezüglich einem Arbeitsgas (G) eine Hochdruckseite (10a) sowie eine Niederdruckseite (10b) aufweist, wobei die Dichtkammer (3a) eine zur Hochdruckseite (10a) hin ausgerichtete Stützfläche (3b) aufweist, welche die Dichtkammer (3a) zur Niederdruckseite (10b) hin begrenzt, wobei der Dichtring (2) in radialer Richtung eine Innenseite (2e) sowie eine Aussenseite (2f) aufweist, und wobei der Dichtring (2) eine erste und eine zweite Stirnseite (2a, 2b) aufweist, wobei die erste Stirnseite (2a) zur Hochdruckseite (10a) hin ausgerichtet ist und eine Druckangriffsfläche für das Arbeitsgas (G) ausbildet, und wobei die zweite Stirnseite (2b) zur Niederdruckseite (10b) hin ausgerichtet ist und eine Auflagefläche (2c) ausbildet, sodass der Dichtring (2) während eines Normalbetriebs mit der Auflagefläche (2c) gegen die Stützfläche (3b) gepresst wird und an dieser anliegt, **dadurch gekennzeichnet, dass** der an der Stützfläche (3b) anliegende Dichtring (2) zum Zentrieren vorerst durch eine aktiv wirkende Abhebevorrichtung (4) in Längsrichtung (L) zur Hochdruckseite (10a) hin bewegt und dabei von der Stützfläche (3b) abgehoben wird, sodass zwischen der Stützfläche (3b) und der Auflagefläche (2c) des Dichtrings (2) ein Zwischenspalt (Z) erzeugt wird in welchen das Arbeitsgas (G) von der Hochdruckseite (10a) her eindringt, sodass die Anpresskraft des Dichtrings (2) in Längsrichtung (L) reduziert wird, um dadurch die Reibkraft zu reduzieren, welche zu überwinden ist, um den Dichtring (2) in zur Längsrichtung (L) radialen Richtung (R ) zu bewegen, und dass der Dichtring (2) nach dessen Abheben in radialer Richtung (R) verschoben wird.

10. Verfahren nach Anspruch 9, **dadurch gekennzeichnet, dass** der Dichtring (2) während einer Saugbewegung der Kolbenstange (5) sowohl angehoben und als auch wieder abgesenkt wird.

11. Verfahren nach Anspruch 9 oder 10, **dadurch gekennzeichnet, dass** der Dichtring (2) im angehobenen Zustand durch die einwirkenden Radialkräfte selbsttätig zentriert wird.

12. Verfahren nach einem der Ansprüche 9 oder 10, **dadurch gekennzeichnet, dass** der gesamte Dichtring (2) oder Dichtsegmente (2i, 2k) des Dichtrings (2) im angehobenen Zustand durch einen mechanisch einwirkenden Radialaktuator (6) zentriert wird.

13. Verfahren nach einem der Ansprüche 9 bis 12, **dadurch gekennzeichnet, dass** der Dichtring (2) während jeder vollständigen Hin- und Herbewegung der Kolbenstange (5) einmal angehoben und wieder abgesenkt wird.

14. Verfahren nach einem der Ansprüche 9 bis 13, **dadurch gekennzeichnet, dass** der gesamte Dichtring (2) oder Dichtsegmente (2i, 2k) des Dichtrings (2) in radialer Richtung (R ) verschoben wird, falls die Distanz zwischen der Kolbenstange (5) und der Innenseite (2e) des Dichtrings (2) von einem vorgegebenen Solldistanzwert abweicht.

## Claims

1. Dry-running piston rod packing (10) for sealing a piston rod (5) mounted movably in a longitudinal direction (L), comprising at least one chamber ring (3) and a sealing ring (2), the chamber ring (3) having a sealing chamber (3a) inside which the sealing ring (2) is arranged, the piston rod packing (10) having a high-pressure side (10a) and a low-pressure side (10b), wherein the sealing chamber (3a) has a supporting surface (3b) which is oriented towards the high-pressure side (10a) and which bounds the sealing chamber (3a) towards the low-pressure side (10b), wherein the sealing ring (2) has an inner side (2e) and an outer side (2f) in the radial direction, and wherein the sealing ring (2) has a first and a second end face (2a, 2b), wherein the first face (2a) is oriented towards the high pressure side (10a) and forms a pressure engagement surface, and wherein the second face (2b) is oriented towards the low pressure side (10b) and forms a bearing surface (2c), so that a pressurized sealing ring (2) rests with the bearing surface (2c) against the supporting surface (3b), the sealing ring (2) being designed as an endless sealing ring, **characterized in that** an actively acting lifting device (4) comprising an actuator (4a) is designed in such a way that it lifts a sealing ring (2) bearing against the supporting surface (3b) in the longitudinal direction (L) towards the high-pressure side (10a) in order to form an intermediate gap (Z) between the supporting surface (3b) and the bearing surface (2c) of the sealing ring (2).

2. Piston rod packing according to claim 1, **characterized in that** it comprises a plurality of chamber rings (3) and sealing chambers (3a) arranged in succession in the longitudinal direction (L), a single sealing ring (2) being arranged in each sealing chamber (3a).

3. Piston rod packing according to one of the preceding claims, **characterized in that** the sealing ring (2) is of multi-part design, comprising a circumferentially endless guide part (2g) with side guides (2h), and comprising two narrow sealing segments (2i) and two wide sealing segments (2k), which are mounted in the guide part (2g) so as to be movable in the radial direction (R) by the side guides (2h).

4. Piston rod packing according to one of the preceding claims, **characterized in that** at least two and preferably three lifting devices (4) are associated with each sealing ring (2), and **in that** the lifting devices (4) are arranged mutually spaced in the circumferential direction of the sealing ring (2).

5. Piston rod packing according to claim 4, **characterized in that** the lifting device (4) comprises a permanent magnet (2d) as well as an electromagnet, wherein the permanent magnet (2d) is arranged in the sealing ring (2), and wherein the electromagnet is arranged in the chamber ring (3), wherein the permanent magnet (2d) and the electromagnet are arranged preferably opposite each other in longitudinal direction (L).

6. Piston rod packing according to claim 4, **characterized in that** the lifting device (4) comprises a pusher part with a pusher surface (4d), the pusher surface (4d) projecting beyond the supporting surface 3b in the activated state.

7. Piston rod packing according to claim 4 or 6, **characterized in that** the lifting device (4) comprises a piezoelectric crystal, the piezoelectric crystal being arranged in the chamber ring (3).

8. Piston rod packing according to one of the preceding claims, **characterized in that** it comprises a radial actuator (6) designed to engage the outside (2f) of the sealing ring (2) and to displace the entire sealing ring (2) or sealing segments (2i, 2k) of the sealing ring (2) in the radial direction (R).

9. Method of operating a dry-running piston rod packing (10) for sealing a piston rod (5) mounted movably in a longitudinal direction (L), the piston rod packing (10) comprising at least one chamber ring (3) and a sealing ring (2), the chamber ring (3) comprising a sealing chamber (3a) within which the sealing ring (2) is arranged, the piston rod packing (10) enclosing the piston rod (5), the piston rod packing (10) having a high-pressure side (10a) and a low-pressure side (10b) with respect to a working gas (G), wherein the sealing chamber (3a) has a supporting surface (3b) oriented towards the high pressure side (10a), which supporting surface (3b) bounds the sealing chamber (3a) towards the low pressure side (10b), wherein the sealing ring (2) has an inner side (2e) and an outer side (2f) in the radial direction, and wherein the sealing ring (2) has a first and a second end face (2a, 2b), wherein the first end face (2a) is oriented towards the high-pressure side (10a) and forms a pressure engagement surface for the working gas (G), and wherein the second end face (2b) is oriented towards the low-pressure side (10b) and forms a bearing surface (2c), so that the sealing ring (2) is pressed with the bearing surface (2c) against the supporting surface (3b) and rests against the latter during normal operation, **characterized in that**, for centering, the sealing ring (2) resting against the supporting surface (3b) is first moved in the longitudinal direction (L) towards the high-pressure side (10a) by an actively acting lifting device (4) and is lifted off the supporting surface (3b) in the process, so that between the supporting surface (3b) and the bearing surface (2c) of the sealing ring (2) an intermediate gap (Z) is created into which the working gas (G) penetrates from the high pressure side (10a) so that the contact pressure of the sealing ring (2) in the longitudinal direction (L) is reduced, in order to thereby reduce the frictional force which must be overcome in order to move the sealing ring (2) in a direction (R) radial to the longitudinal direction (L), and **in that** the sealing ring (2) is displaced in the radial direction (R) after being lifted off.

10. Method according to claim 9, **characterized in that** the sealing ring (2) is both raised and lowered again during a suction movement of the piston rod (5).

11. Method according to claim 9 or 10, **characterized in that** the sealing ring (2) is automatically centered in the raised state by the acting radial forces.

12. Method according to one of claims 9 or 10, **characterized in that** the entire sealing ring (2) or sealing segments (2i, 2k) of the sealing ring (2) is centered in the raised state by a mechanically acting radial actuator (6).

13. Method according to any one of claims 9 to 12, **characterized in that** the sealing ring (2) is raised once and lowered again during each complete reciprocating movement of the piston rod (5).

14. Method according to one of claims 9 to 13, **characterized in that** the entire sealing ring (2) or sealing segments (2i, 2k) of the sealing ring (2) is displaced in radial direction (R) if the distance between the piston rod (5) and the inner side (2e) of the sealing ring (2) deviates from a predetermined nominal distance value.

## Revendications

1. Garniture de tige de piston (10) fonctionnant à sec pour l'étanchéité d'une tige de piston (5) montée de façon mobile dans une direction longitudinale (L), comprenant au moins une bague de chambre (3) et une bague d'étanchéité (2), la bague de chambre (3) présentant une chambre d'étanchéité (3a) à l'intérieur de laquelle est disposée la bague d'étanchéité (2), la garniture de tige de piston (10) présentant un côté haute pression (10a) et un côté basse pression (10b), dans lequel la chambre d'étanchéité (3a) présente une surface d'appui (3b) qui est orientée vers le côté haute pression (10a) et qui délimite la chambre d'étanchéité (3a) vers le côté basse pression (10b), dans lequel la bague d'étanchéité (2) présente un côté intérieur (2e) et un côté extérieur (2f) dans la direction radiale, et dans lequel la bague d'étanchéité (2) présente une première et une deuxième face frontale (2a, 2b), dans lequel la première face (2a) est orientée vers le côté haute pression (10a) , et dans lequel la deuxième face (2b) est orientée vers le côté basse pression (10b) et forme une surface de contact (2c), de sorte qu'une bague d'étanchéité (2) sous pression repose avec la surface de contact (2c) contre la surface d'appui (3b), la bague d'étanchéité (2) étant conçue comme une bague d'étanchéité sans fin, **caractérisé en ce qu'**un dispositif de levage (4) à action active comprenant un actionneur (4a) est conçu de telle sorte qu'il soulève une bague d'étanchéité (2) s'appuyant contre la surface d'appui (3b) dans la direction longitudinale (L) vers le côté haute pression (10a) afin de former un espace intermédiaire (Z) entre la surface d'appui (3b) et la surface de contact (2c) de la bague d'étanchéité (2).

2. Garniture de tige de piston selon la revendication 1, **caractérisée en ce qu'**elle comprend une pluralité de bagues de chambre (3) et de chambres d'étanchéité (3a) disposées en succession dans la direction longitudinale (L), une seule bague d'étanchéité (2) étant disposée dans chaque chambre d'étanchéité (3a).

3. Garniture de tige de piston selon l'une des revendications précédentes, **caractérisée en ce que** la bague d'étanchéité (2) est réalisée en plusieurs parties, comprenant une partie de guidage (2g) sans fin sur la circonférence avec des guides latéraux (2h), et comprenant deux segments d'étanchéité étroits (2i) et deux segments d'étanchéité larges (2k), qui sont montés dans la partie de guidage (2g) de manière à pouvoir être déplacés dans la direction radiale (R) par les guides latéraux (2h).

4. Garniture de tige de piston selon l'une des revendications précédentes, **caractérisée en ce qu'**au moins deux et de préférence trois dispositifs de levage (4) sont associés à chaque anneau d'étanchéité (2), et **en ce que** les dispositifs de levage (4) sont disposés à distance les uns des autres dans la direction circonférentielle de l'anneau d'étanchéité (2).

5. Garniture de tige de piston selon la revendication 4, **caractérisée en ce que** le dispositif de levage (4) comprend un aimant permanent (2d) ainsi qu'un électroaimant, l'aimant permanent (2d) étant disposé dans la bague d'étanchéité (2), et l'électroaimant étant disposé dans la bague de chambre (3), l'aimant permanent (2d) et l'électroaimant étant disposés de préférence en face l'un de l'autre dans la direction longitudinale (L).

6. Garniture de tige de piston selon la revendication 4, **caractérisée en ce que** le dispositif de levage (4) comprend une élément poussoir avec une surface de poussoir (4d), la surface de poussoir (4d) faisant saillie au-delà de la surface de support 3b dans l'état activé.

7. Garniture de tige de piston selon la revendication 4 ou 6, **caractérisée en ce que** le dispositif de levage (4) comprend un cristal piézoélectrique, le cristal piézoélectrique étant disposé dans la bague de chambre (3).

8. Garniture de tige de piston selon l'une des revendications précédentes, **caractérisée en ce qu'**elle comprend un actionneur radial (6) conçu pour engager l'extérieur (2f) de la bague d'étanchéité (2) et pour déplacer la totalité de la bague d'étanchéité (2) ou des segments d'étanchéité (2i, 2k) de la bague d'étanchéité (2) dans la direction radiale (R) .

9. Procédé de fonctionnement d'une garniture de tige de piston (10) fonctionnant à sec pour l'étanchéité d'une tige de piston (5) montée de façon mobile dans une direction longitudinale (L), la garniture de tige de piston (10) comprenant au moins une bague de chambre (3) et une bague d'étanchéité (2), la bague de chambre (3) comprenant une chambre d'étanchéité (3a) à l'intérieur de laquelle la bague d'étanchéité (2) est disposée, la garniture de tige de piston (10) enfermant la tige de piston (5), la garniture de tige de piston (10) ayant un côté haute pression (10a) et un côté basse pression (10b) par rapport à un gaz de travail (G), dans lequel la chambre d'étanchéité (3a) a une surface d'appui (3b) orientée vers le côté haute pression (10a), laquelle surface d'appui (3b) délimite la chambre d'étanchéité (3a) vers le côté basse pression (10b), dans lequel la bague d'étanchéité (2) a un côté intérieur (2e) et un côté extérieur (2f) dans la direction radiale, et dans lequel la bague d'étanchéité (2) a une première et une seconde face d'extrémité (2a, 2b), dans lequel la première face d'extrémité (2a) est orientée vers le côté haute pression (10a) et forme une surface d'engagement de pression pour le gaz de travail (G), et dans lequel la deuxième face frontale (2b) est orientée vers le côté basse pression (10b) et forme une surface de contact (2c), de sorte que la bague d'étanchéité (2) est pressée avec la surface de contact (2c) contre la surface d'appui (3b) et repose sur cette dernière en fonctionnement normal, **caractérisé en ce que**, pour le centrage, la bague d'étanchéité (2) reposant sur la surface d'appui (3b) est d'abord déplacée dans la direction longitudinale (L) vers le côté haute pression (10a) par un dispositif de levage (4) à action active et est ainsi soulevée de la surface d'appui (3b), de sorte qu'entre la surface d'appui (3b) et la surface de contact (2c) de la bague d'étanchéité (2), il se crée un espace intermédiaire (Z) dans lequel pénètre le gaz de travail (G) provenant du côté haute pression (10a), de sorte que la pression de contact de la bague d'étanchéité (2) dans la direction longitudinale (L) est réduite, afin de réduire ainsi la force de frottement qui doit être surmontée pour déplacer la bague d'étanchéité (2) dans une direction (R) radiale par rapport à la direction longitudinale (L), et **en ce que** la bague d'étanchéité (2) est déplacée dans la direction radiale (R) après avoir été soulevée.

10. Procédé selon la revendication 9, **caractérisé en ce que** la bague d'étanchéité (2) est à la fois soulevée et abaissée à nouveau pendant un mouvement d'aspiration de la tige de piston (5).

11. Procédé selon la revendication 9 ou 10, **caractérisé en ce que** la bague d'étanchéité (2) est automatiquement centrée à l'état relevé par l'action des forces radiales.

12. Procédé selon l'une des revendications 9 ou 10, **caractérisé en ce que** l'ensemble de la bague d'étanchéité (2) ou des segments d'étanchéité (2i, 2k) de la bague d'étanchéité (2) est centré à l'état relevé par un actionneur radial (6) à action mécanique.

13. Procédé selon l'une quelconque des revendications 9 à 12, **caractérisé en ce que** la bague d'étanchéité (2) est soulevée une fois et abaissée à nouveau pendant chaque mouvement de va-et-vient complet de la tige de piston (5).

14. Procédé selon l'une des revendications 9 à 13, **caractérisé en ce que** l'ensemble de la bague d'étanchéité (2) ou des segments d'étanchéité (2i, 2k) de la bague d'étanchéité (2) est déplacé dans la direction radiale (R) si la distance entre la tige de piston (5) et le côté intérieur (2e) de la bague d'étanchéité (2) s'écarte d'une valeur de distance nominale prédéterminée.
